# EUROPÄISCHE PATENTSCHRIFT

(11) **EP 2 639 363 B1**
(45) Veröffentlichungstag und Bekanntmachung des Hinweises auf die Patenterteilung: **16.08.2017**
(21) Anmeldenummer: 13000824.6
(22) Anmeldetag: 19.02.2013
(51) Int. Cl.: E03C 1/04

(54) **Adapter zur Befestigung einer Armatur auf einer Arbeitsplatte**
Universal adapter for holding and mounting fittings
Adaptateur universel destiné à l'enregistrement et au maintien d'armatures

(30) Priorität: 14.03.2012 DE 202012100912 U
(43) Veröffentlichungstag der Anmeldung: 18.09.2013
(73) Patentinhaber: Franke Water Systems AG, 5726 Unterkulm (CH)
(72) Erfinder: Kirchmann Heinz, 58644 Iserlohn (DE)
(74) Vertreter: Lemcke, Brommer & Partner Patentanwälte Partnerschaft mbB

(56) Entgegenhaltungen:
- EP-A1- 0 622 497
- DE-C1- 3 603 151
- DE-U1- 8 709 140
- JP-A- H0 893 010

## Beschreibung

Die Erfindung betrifft die Montage von Küchenarmaturen oder Badarmaturen vor Fenstern.

Bei der Planung von Küchen kommt vermehrt der Wunsch des Benutzers auf, Spülbecken und dazugehörige Küchenarmaturen vor einem Fenster zu platzieren. Die Küchenarmaturen ragen häufig in den Schwenkbereich des Fensters hinein, so dass dieses bei der Verwendung von Standard-Küchenarmaturen häufig nicht oder nicht vollständig geöffnet werden kann, beispielsweise zur Reinigung des oder der Fenster.

Im Stand der Technik sind zur Montage vor Fenstern Spezialarmaturen bekannt, die sich aus einer Position nahe der Spüle oder Arbeitsplatte, an der sie befestigt sind, entfernen lassen, so dass dann ein Öffnen der oder des entsprechenden Fenster ermöglicht ist.

Diese speziellen Armaturen werden nur in relativ geringer Stückzahl hergestellt und sind somit teurer in der Herstellung als vergleichbare Großserien-Produkte. Des Weiteren ist die Auswahl dieser speziellen Armaturen stark eingeschränkt und der Kunde hat nicht die Möglichkeit, eine Armatur nach Wunsch zu einem günstigen Preis zu verwenden. Die JP H08 93010 betrifft Mittel zum Befestigen einer Armatur an einem Waschbecken. Die Armatur ist mit einer Innenhülse verschraubt, wobei letztere in einen am Waschbecken befestigten Befestigungszylinder eingesetzt wird. Der Befestigungszylinder stellt eine Außenhülse dar und ist in eine Spreizhülse eingeschoben, mit welcher eine Art Flansch gebildet wird, der den Befestigungszylinder am Waschbecken festklemmt. Die in den Befestigungszylinder eingesetzte Innenhülse umfasst Vorsprünge, die in Nuten im Befestigungszylinder einrasten. Mithilfe dieser Rastverbindung wird die Innenhülse im Befestigungszylinder und damit die Armatur am Waschbecken fixiert. Innenhülse und Außenhülse weisen je einen Kragen auf, die im installierten Zustand aufeinander zu liegen kommen. Die EP 0 622 497 betrifft eine Wasserauslaufanordnung, bei welcher eine Armatur und ein Armaturenhalter über einen bajonettartigen Steckverschluss miteinander verbunden sind. Durch Lösen des Steckverschlusses kann die gesamte Armatur aus dem Armaturenhalter herausgezogen werden.

Die DE 3 603 151 betrifft einen Einhebelmischer mit einem Armaturenkörper, der an einem Waschbecken befestigbar ist. Am Armaturenkörper ist radial ein Auslaufarm und axial eine Gleithülse angeformt, die mit zwei in axialer Richtung beanstandeten Arretierbohrungen versehen ist. Die Gleithülse ist in einer am Waschbecken befestigten Sockelhülse geführt und kann durch Einrasten eines Arretierknopfes in einer der Arretierbohrungen in der Sockelhülse fixiert werden. Durch Herausziehen des Arretierknopfes wird die Gleithülse der Armatur freigegeben, so dass eine Axialverschiebung der Armatur ermöglicht wird.

Ausgehend von dem eingangs genannten Stand der Technik liegt der Erfindung die Aufgabe zugrunde, eine Möglichkeit zur Verwendung von Standard-Küchenarmaturen oder -Badarmaturen zur Verfügung zu stellen, mittels derer herkömmliche Küchenarmaturen oder Badarmaturen auch vor einem Fenster platziert werden können und demnach das Fenster vollständig aufgeschwenkt werden kann. Vor allem soll der Benutzer die Armatur zum Öffnen des Fensters auf schnelle und einfache Art und Weise abnehmen und nach dem Schließen des Fensters wieder anbringen können. Dabei soll insbesondere ein versehentliches Entfernen oder bei der Benutzung entstehende Klappergeräusche vermieden werden. Zur Lösung dieser Aufgabe schlägt die Erfindung einen Universaladapter gemäß Anspruch 1 vor.

Mittels eines derartigen Universaladapters ist es möglich, nahezu jede herkömmliche Küchen- oder Badarmatur, die einen Gewindestutzen zur Montage aufweist, vor einem zu öffnenden Fenster zu montieren. Dabei wird der Gewindestutzen der Armatur mit der Innenhülse des Universaladapters verbunden, und durch Einführen der Innenhülse in die Außenhülse des Universaladapters in die gewünschte Benutzungsposition gebracht. Die Zuleitungen für Wasser können dabei wie üblich durch flexible Schläuche gebildet sein, die durch die Innenhülse und die Außenhülse hindurchgeführt sind. Sollte nun der Benutzer das Fenster öffnen wollen, so wird die Armatur mit samt der Innenhülse aus der Außenhülse herausgezogen und abgelegt. Nun kann das Fenster geöffnet und beispielsweise gereinigt werden. Nach Verschließen des Fensters kann die Armatur mit Innenhülse auf schnelle und einfache Art und Weise wieder in die Außenhülse eingesteckt werden und anschließend direkt vom Benutzer benutzt werden.

Mittels eines derartigen Universaladapters ist die Verwendung nahezu jeder beliebigen Standard-Küchenarmatur vor einem Fenster ermöglicht, so dass der Benutzer nicht auf hochpreisige Kleinserien in der Auswahl beschränkt bzw. eingeschränkt ist.

Erfindungsgemäß ist vorgesehen, dass der Innendurchmesser des Kragens der Außenhülse geringfügig größer ist als der Außendurchmesser des Kragens der Innenhülse, sodass der Kragen der Innenhülse passgenau in den Kragen der Außenhülse einführbar ist.

Bei der erfindungsgemäßen Lösung liegt zusätzlich oder alternativ zum zylindrischen Abschnitt der Kragen der Außenhülse spielfrei am Kragen der Innenhülse an, wodurch ein spielfreier Sitz der Innenhülse mit Armatur innerhalb der Außenhülse sichergestellt wird.

Hierdurch ist lediglich ein axiales Anheben oder Drehen in Umfangsrichtung der Längsmittelachse der Innenhülse ermöglicht, wodurch ein besonders hochwertiger Eindruck beim Benutzen entsteht. Die Innenhülse verbleibt dabei durch das durch die Innenhülse und die Armatur gebildete Gewicht innerhalb der Außenhülse.

Um einen spielfreien Sitz der Innenhülse innerhalb der Außenhülse zusätzlich sicherzustellen, kann besonders bevorzugt vorgesehen sein, dass die Innenhülse passgenau in die Außenhülse einführbar ist.

Ein versehentliches Entfernen oder bei der Benutzung entstehende Klappergeräusche sind durch den passgenauen Sitz der Innenhülse innerhalb der Außenhülse vermieden.

Zur einfachen Befestigung einer standardisierten Armatur kann besonders bevorzugt vorgesehen sein, dass das Innengewinde an der Innenhülse nahe des Kragens der Innenhülse ausgebildet ist.

Hierdurch ist es ermöglicht, eine Standardarmatur mit ihrem Gewindestutzen in das Innengewinde an der Innenhülse des Universaladapters einzuschrauben und dauerhaft mit dieser zu verbinden. Somit ist eine schnelle Verbindung auf einfache Art und Weise zwischen Innenhülse und Standard-Küchenarmatur oder -Badarmatur ermöglicht.

Weiter kann besonders bevorzugt vorgesehen sein, dass an dem Kragen der Innenhülse ein vom Kragen nach außen abragender Flansch ausgebildet ist.

Ein derartiger Flansch kann beispielsweise als Wegbegrenzer beim Einführen in die Außenhülse dienen.

Auch kann besonders bevorzugt vorgesehen sein, dass zwischen dem Kragen und dem zylindrischen Abschnitt der Innenhülse eine Fase ausgebildet ist.

Hierdurch ist eine erleichterte Einführung des Kragens der Innenhülse in den Kragen der Außenhülse ermöglicht.

Um ein ungewolltes Eindringen von Wasser und/oder Schmutz zu verhindern, kann besonders bevorzugt vorgesehen sein, dass der Kragen der Außenhülse eine außen umlaufende Nut aufweist, in der in der Zusammenbaulage ein Dichtmittel, wie beispielsweise ein O-Ring angeordnet ist.

Weiter kann besonders bevorzugt vorgesehen sein, dass das an der Außenhülse ausgebildete Außengewinde sich vom freien Ende beginnend über einen Teilbereich der Länge des zylindrischen Abschnitts der Außenhülse erstreckt.

Je nach Einsatzzweck und je nach Dicke der Arbeitsplatte der Küche kann das an der Außenhülse ausgebildete Außengewinde sich über die gesamte Länge oder über einen Teilbereich der Länge des zylindrischen Abschnitts der Außenhülse erstrecken.

Darüber hinaus kann besonders bevorzugt vorgesehen sein, dass der Kragen der Außenhülse eine Ausnehmung aufweist, in der in der Zusammenbaulage ein zweites Befestigungsmittel, beispielsweise ein Gewindestift, angeordnet ist. Vorzugsweise ist die Ausnehmung als in axialer Richtung randoffene Mulde ausgebildet.

Weiter kann besonders bevorzugt vorgesehen sein, dass das erste Befestigungsmittel aus einer Scheibe mit Durchgangslochung und Innengewinde besteht, wobei das Innengewinde dem Außengewinde der Außenhülse entspricht, wobei ferner dem Innengewinde benachbart, über den Umfang der Scheibe verteilt mehrere, beispielsweise vier, weitere parallel zur Durchgangslochung verlaufende Gewindelochungen angeordnet oder ausgebildet sind, die in der Befestigungslage von Gewindestiften durchgriffen sind, wobei in der Befestigungslage die die Scheibe durchgreifenden Bereiche der Gewindestifte auf eine Unterlegscheibe einwirken, die gegen die Unterseite der Montagefläche anpressbar ist.

Die Verwendung einer derartigen Scheibe mit zusätzlichen Gewindelochungen ermöglicht ein sicheres Vorfixieren der Außenhülse an einer Küchenarbeitsplatte oder einer Spüle. Häufig ist der die Küchenarbeitsplatte oder die Spüle durchgreifende Bereich nur sehr schlecht zugänglich, so dass nur wenig Platz zum Einsatz von Werkzeug, wie beispielsweise Schraubenschlüssel oder Zangen vorhanden ist. Eine derartige Scheibe wird mit ihrem Innengewinde auf das Außengewinde der Außenhülse aufgeschraubt und handfest angezogen. Dabei presst die Scheibe mit Innengewinde eine auf ihr aufliegende Unterlegscheibe gegen die Unterseite der Küchenarbeitsplatte oder Spüle. Nach dem handfesten Anziehen werden Gewindestifte in die weiteren Gewindelochungen der Scheibe eingeschraubt, die mit einem Langformwerkzeug, wie beispielsweise mit einem langen Schraubenzieher, in die weiteren Gewindelochungen eingedreht werden und nach Durchgreifen der Gewindelochungen der Scheibe den Druck der Unterlegscheibe gegen die Küchenarbeitsplatte oder die Spüle erhöhen. Somit ist ein hochfestes Verschrauben auch bei nur eingeschränkten Platzverhältnissen ermöglicht.

Alternativ kann vorgesehen sein, dass das erste Befestigungsmittel aus einer Mutter mit Werkzeugangriff und einer Unterlegscheibe besteht.

Eine derartige Lösung bietet sich an, wenn im die Außenhülse umgebenden Bereich ausreichend Platz und Raum zur Verwendung von herkömmlichem Werkzeug, wie Schraubenschlüssel oder Zange ermöglicht ist.

Um einen Sichtschutz auf die in Richtung der Armatur verlaufenden Endbereiche der Innenhülse und der Außenhülse zu schaffen, kann besonders bevorzugt vorgesehen sein, dass der Universaladapter einen Blendring aufweist, der aus einem zylindrischen Abschnitt mit Boden und Durchgangslochung im Boden besteht und die Kragen der Außenhülse und der Innenhülse überdeckt bzw. abdeckt.

Schließlich kann dabei besonders bevorzugt vorgesehen sein, dass der zylindrische Abschnitt des Blendrings eine Gewindelochung aufweist, die in der Gebrauchslage vom das zweite Befestigungsmittel bildenden Gewindestift durchgriffen ist.

Mittels eines derartigen Blendrings wird zum einen der Blick des Betrachters auf die die Spüle bzw. die Küchenarbeitsplatte in Richtung der Armatur durchgreifenden Teile des Universaladapters verhindert und ein ansprechender ästhetischer Eindruck erreicht. Zum anderen kann mittels des die Gewindelochung des Blendrings durchgreifenden Gewindestiftes sowohl der Blendring als auch die Armatur selbst dauerhaft und verdrehsicher mit der Innenhülse verbunden werden. Dabei wird der Gewindestift, der beispielsweise durch eine Madenschraube gebildet sein kann, in die Gewindelochung des Blendrings diese durchgreifend eingeschraubt, und mit dem in Richtung der Längsmittelachse des Universaladapters gerichteten Ende gegen die Außenseite des Kragens der Innenhülse gepresst. In dieser Lage ist ein relatives Verdrehen des Blendrings gegenüber der Innenhülse und somit gegenüber der Armatur, die mit der Innenhülse verdrehsicher verschraubt ist, verhindert. Zusätzlich ist durch den in dieser Lage befindlichen Gewindestift eine Positionierhilfe gegeben. Der Gewindestift liegt in der eingeführten Gebrauchslage der Armatur mit Innenhülse in der Außenhülse in einer an der Außenhülse ausgebildeten randoffenen Ausnehmung, so dass nach dem Einführen der Innenhülse in die Außenhülse die Armatur lagerichtig positioniert ist.

Ein Ausführungsbeispiel der Erfindung ist in den Figuren dargestellt und im Folgenden näher beschrieben.

Es zeigt:
- Figur 1: einen erfindungsgemäßen Universaladapter in Explosionsdarstellung;

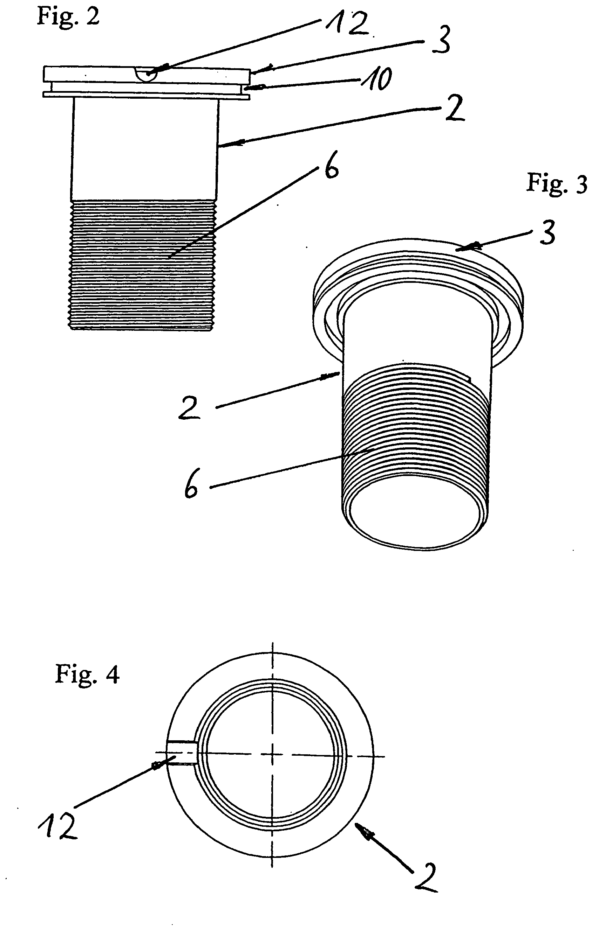

- Figur 2: eine Außenhülse in Seitenansicht;
- Figur 3: desgleichen von schräg unten gesehen,
- Figur 4: desgleichen in Draufsicht;
- Figur 5: eine erfindungsgemäße Innenhülse in Seitenansicht;
- Figur 6: desgleichen von schräg unten gesehen;
- Figur 7: desgleichen in Draufsicht;
- Figur 8: desgleichen von schräg oben gesehen;
- Figur 9: eine erfindungsgemäße Scheibe mit Durchgangsbohrungen in Draufsicht;
- Figur 10: desgleichen von der Seite schräg gesehen;
- Figur 11: eine erfindungsgemäße Befestigungsmutter mit Werkzeugangriff von schräg oben gesehen;
- Figur 12: eine erfindungsgemäße Unterlegscheibe von der Seite schräg gesehen;
- Figur 13: einen erfindungsgemäße Blendring von schräg unten gesehen;
- Figur 14: den Blendring in Draufsicht.

In den Figuren ist ein Universaladapter 1 zur Aufnahme und Halterung von Armaturen wie beispielsweise Küchenarmaturen oder Badarmaturen zur Regelung des Zuflusses und der Mischung von Wasser gezeigt. Die Armaturen weisen üblicherweise einen Gewindestutzen zur Befestigung an Objekten auf. Der Universaladapter 1 besteht aus einem ersten zylindrischen Abschnitt als Außenhülse 2, mit nach außen abragendem Kragen 3 an einem Endbereich zur Befestigung an der Durchgangslochung einer Aufnahmeplatte für die Armatur. Die Aufnahmeplatte kann dabei beispielsweise durch eine Küchenarbeitsplatte oder eine Spüle oder dergleichen Arbeitsplatte gebildet sein.

Zudem weist der Universaladapter 1 einen zweiten zylindrischen Abschnitt als Innenhülse 4 mit einem zweiten, nach außen abragenden Kragen 5 an einem Endbereich auf. Der Außendurchmesser der Innenhülse 4 ist geringfügig kleiner als der Innendurchmesser der Außenhülse 2 und die Innenhülse 4 ist so weit in die Außenhülse 2 einführbar, bis der Kragen 5 der Innenhülse 4 an dem Kragen 3 der Außenhülse 2 anliegt. Dabei weist der die Durchgangslochung der Aufnahmeplatte für die Armatur durchgreifende Bereich der Außenhülse 2 ein Außengewinde 6 für ein erstes Befestigungsmittel auf. Die Armatur ist mittels Einschrauben ihres Gewindestutzens in ein an der Innenhülse 4 ausgebildetes Innengewinde 7 an der Innenhülse 4 befestigt oder befestigbar. Durch einen derartigen Universaladapter 1 ist die Verwendung von Standard-Küchenarmaturen oder Standard-Badarmaturen vor zu öffnenden Fenstern ermöglicht. Mittels des Universaladapters 1 kann nahezu jede beliebige Küchen- oder Badarmatur vor einem zu öffnenden Fenster Verwendung finden. Wenn das Fenster geöffnet werden soll, beispielsweise zum Zwecke der Reinigung, kann die an dem Innengewinde 7 der Innenhülse 4 befestigte Armatur mitsamt der Innenhülse 4 aus der Außenhülse 2 des Universaladapters 1 herausgezogen und bei Seite gelegt werden. Anschließend kann das Fenster geöffnet und beispielsweise gereinigt werden. Nach Verschließen des Fensters wird die Innenhülse 4 mit samt daran befestigter Armatur in die Außenhülse 2 des Universaladapters 1 eingeführt und kann in an sich bekannter Weise Verwendung finden. Somit ist mittels eines langlebigen und kostengünstig herstellbaren Universaladapters 1 die Verwendung nahezu jeder beliebiger Küchen- oder Badarmatur vor einem Fenster ermöglicht.

Dabei sind der Außendurchmesser des zylindrischen Abschnitts der Innenhülse 4 und der Innendurchmesser des zylindrischen Abschnitts der Außenhülse 2 derart aufeinander abgestimmt, dass die Innenhülse 4 passgenau in die Außenhülse 2 einführbar ist. Hierdurch ist eine spielfreie Lage der Innenhülse 4 innerhalb der Außenhülse 2 ermöglicht, wodurch beispielsweise ungewünschte Klappergeräusche vermieden sind.

Zudem ist der Innendurchmesser des Kragens 3 der Außenhülse 2 lediglich geringfügig größer als der Außendurchmesser des Kragens 5 der Innenhülse 4, so dass der Kragen 5 der Innenhülse 4 passgenau in den Kragen 3 der Außenhülse 2 einführbar ist.

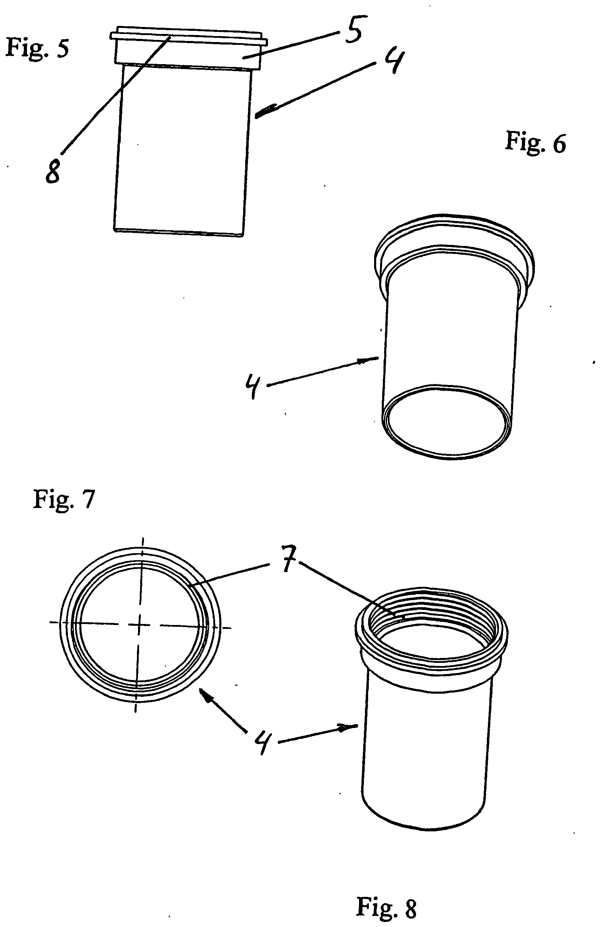

Wie insbesondere aus Figur 7 ersichtlich, ist das Innengewinde 7 an der Innenhülse 4 im Bereich des Kragens 5 der Innenhülse 4 ausgebildet. Zur Verbindung einer Standard-Küchenarmatur muss diese lediglich mit ihrem Gewindestutzen in das Innengewinde 7 an der Innenhülse 4 im Bereich des Kragens 5 der Innenhülse 4 eingeschraubt werden.

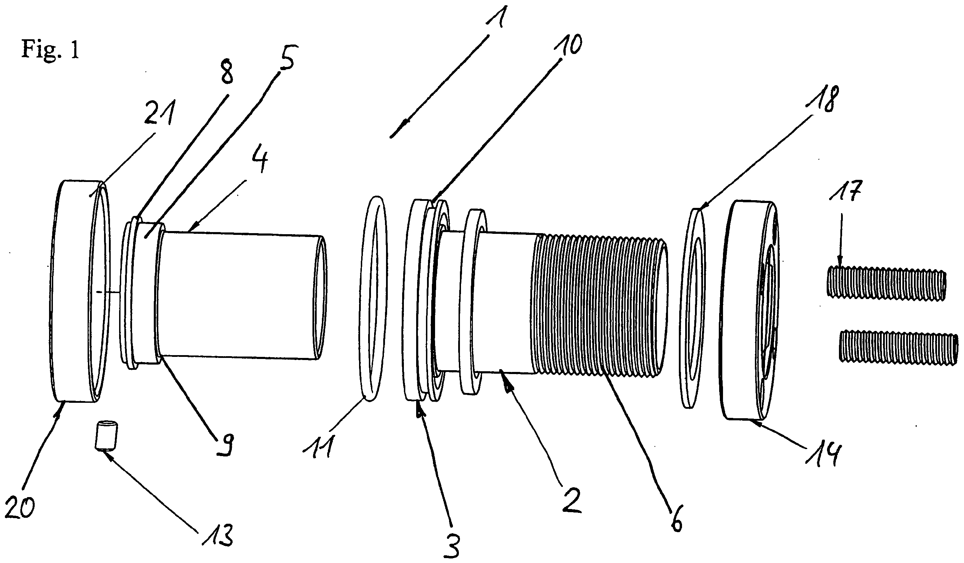

Wie aus den Figuren 1 und 5 insbesondere ersichtlich, ist an dem Kragen 5 der Innenhülse 4 ein vom Kragen 5 nach außen abragender Flansch 8 ausgebildet. Ein derartiger Flansch 8 dient beispielsweise als Auflage auf dem Kragen 3 der Außenhülse 2.

Zur erleichterten Einführung des Kragens 5 in den Kragen 3 ist zwischen dem Kragen 5 und dem zylindrischen Abschnitt der Innenhülse 4 eine Fase 9 ausgebildet.

Um ein Verschmutzen bzw. Einlaufen von Wasser in den Kragen 3 der Außenhülse 2 zu verhindern, ist am Kragen 3 der Außenhülse 2 eine außenumlaufende Nut 10 ausgebildet. In der Zusammenbaulage ist in der Nut 10 ein O-Ring 11 als Dichtmittel angeordnet. Der O-Ring 11 dichtet somit gegenüber dem Kragen 3 überdeckende Teile ab.

Das Außengewinde 6 der Außenhülse 2 erstreckt sich im Ausführungsbeispiel vom unteren freien Ende der Außenhülse 2 beginnend an über einen Teilbereich der Länge des zylindrischen Abschnitts der Außenhülse 2. Alternativ kann sich das Außengewinde 6 auch über die gesamte Länge des zylindrischen Abschnitts der Außenhülse 2 erstrecken.

Der Kragen 3 der Außenhülse 2 weist eine randoffene Ausnehmung 12 auf, in der in der Zusammenbaulage ein zweites Befestigungsmittel in Form eines Gewindestiftes 13 angeordnet ist. Der Gewindestift 13 liegt dabei in der Gebrauchslage in der Ausnehmung 12 des Kragens 3 der Außenhülse 2, und ermöglicht somit eine lagegenaue Positionierung der Innenhülse 4 und der mit der Innenhülse 4 verbundenen Armatur.

Bei dem in Figur 1 gezeigten Ausführungsbeispiel besteht das erste Befestigungsmittel aus einer Scheibe 14 mit Durchgangslochung und Innengewinde 15. Das Innengewinde 15 entspricht dabei dem Außengewinde 6 der Außenhülse 4, so dass die Scheibe 14 mit ihrem Innengewinde 15 auf das Außengewinde 6 der Außenhülse aufschraubbar ist. Ferner sind dem Innengewinde 15 benachbart, über den Umfang der Scheibe 14 verteilt vier weitere parallel zur Durchgangslochung gerichtete Gewindelochungen 16 angeordnet. Die weiteren Gewindelochungen 16 sind in der Befestigungslage von Gewindestiften 17 durchgriffen, die eine Unterlegscheibe 18 gegen die Unterseite der Aufnahmeplatte für die Armatur, wie beispielsweise eine Küchenarbeitsplatte oder eine Spüle pressen. Hierdurch ist auch bei sehr eingeschränkten Platzverhältnissen eine sichere und dauerhafte Befestigung der Außenhülse 2 des Universaladapters 1 an einer Aufnahmeplatte ermöglicht. Die Scheibe 14 wird lediglich handfest gegen die Unterlegscheibe 18 auf das Außengewinde 6 der Außenhülse 2 aufgeschraubt und gegen die Unterseite der Arbeitsplatte angedrückt, und anschließend wird durch Verschrauben der Gewindestifte 17 durch die Gewindelochungen 16 hindurch ein hoher Druck auf die Unterlegscheibe 18 ausgeübt, so dass diese fest gegen die Arbeitsplattenunterseite angepresst wird.

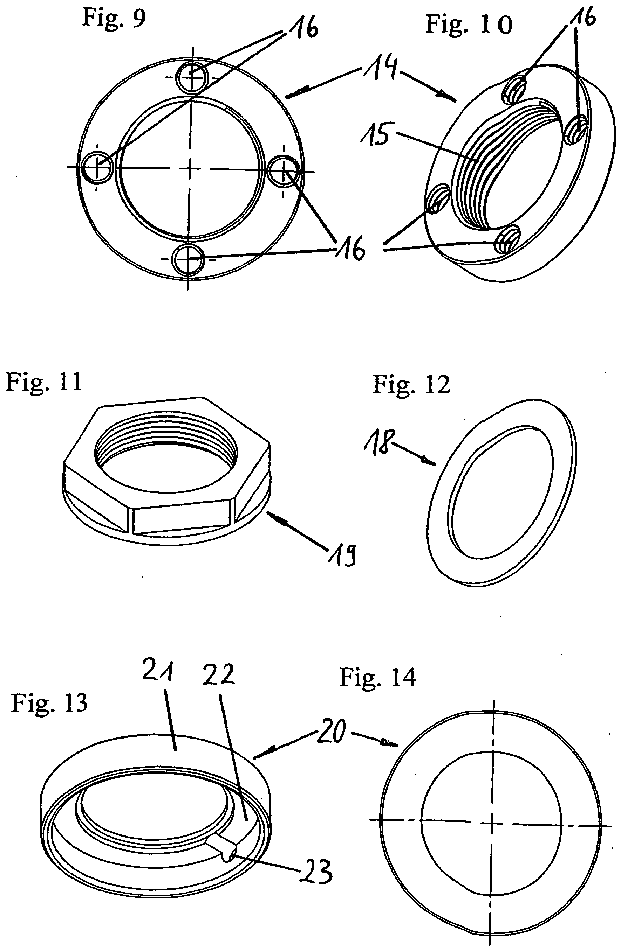

In einem alternativen Ausführungsbeispiel kann das erste Befestigungsmittel auch durch eine Mutter 19, wie aus Figur 11 ersichtlich, mit Werkzeugangriff und einer Unterlegscheibe 18 bestehen.

Der Universaladapter 1 weist als Sichtteil einen Blendring 20 auf, der aus einem zylindrischen Abschnitt 21 mit Boden 22 und Durchgangslochung im Boden 22 besteht. Die Kragen 3,5 der Außenhülse 2 und der Innenhülse 4 sind in der Gebrauchslage von dem Blendring 20 überdeckt, so dass der Benutzer keinen Blick auf die Kragen 3,5 hat. Dabei weist der zylindrische Abschnitt 21 des Blendrings 20 eine Gewindelochung 23 auf, die in der Gebrauchslage vom das zweite Befestigungsmittel bildenden Gewindestift 13 durchgriffen ist. Der Gewindestift 13 verspannt dabei den Blendring 20 verdrehsicher gegenüber der Innenhülse 4. Zudem liegt der Gewindestift 13 in der Gebrauchslage in der an dem Kragen 3 der Außenhülse 2 gebildeten Ausnehmung 12, so dass die mit der Innenhülse 4 verbundene Armatur nach Einführen der Innenhülse 4 in die Außenhülse 2 lagerichtig positioniert ist.

Die Erfindung ist nicht auf das Ausführungsbeispiel beschränkt, sondern im Rahmen der Offenbarung vielfach variabel.

## Patentansprüche

1. Universaladapter (1) zur Aufnahme und Halterung von Armaturen wie Küchenarmaturen oder Badarmaturen zur Regelung des Zuflusses von Wasser, die einen Gewindestutzen zur Befestigung an Objekten aufweisen, der Universaladapter (1) aufweisend einen ersten zylindrischen Abschnitt als Außenhülse (2) mit nach außen abragendem Kragen (3) an einem Endbereich zur Befestigung an der Durchgangslochung einer Aufnahmeplatte für die Armatur wie beispielsweise einer Küchenarbeitsplatte, zudem aufweisend einen zweiten zylindrischen Abschnitt als Innenhülse (4) mit einem zweiten nach außen abragenden Kragen (5) an einem Endbereich, wobei der Außendurchmesser der Innenhülse (4) geringfügig kleiner ist als der Innendurchmesser der Außenhülse (2) und die Innenhülse (4) soweit in die Außenhülse (2) einführbar ist, bis der Kragen (5) der Innenhülse (4) an dem Kragen (3) der Außenhülse (2) anliegt,
wobei der die Durchgangslochung der Aufnahmeplatte für die Armatur durchgreifende Bereich der Außenhülse (2) ein Außengewinde (6) für ein erstes Befestigungsmittel aufweist und die Armatur mittels Einschrauben ihres Gewindestutzens in ein an der Innenhülse (4) ausgebildetes Innengewinde (7) an der Innenhülse befestigbar ist, **dadurch gekennzeichnet, dass** der Innendurchmesser des Kragens (3) der Außenhülse (2) geringfügig größer ist als der Außendurchmesser des Kragens (5) der Innenhülse (4), sodass der Kragen (5) der Innenhülse (4) passgenau in den Kragen (3) der Außenhülse (2) einführbar ist.

2. Universaladapter nach Anspruch 1,
**dadurch gekennzeichnet, dass** die Innenhülse (4) passgenau in die Außenhülse (2) einführbar ist.

3. Universaladapter nach einem der Ansprüche 1 bis 2, **dadurch gekennzeichnet, dass** das Innengewinde (7) an der Innenhülse (4) nahe des Kragens (5) der Innenhülse (4) ausgebildet ist.

4. Universaladapter nach einem der Ansprüche 1 bis 3, **dadurch gekennzeichnet, dass** an dem Kragen (5) der Innenhülse (4) ein vom Kragen (5) nach außen abragender Flansch (8) ausgebildet ist.

5. Universaladapter nach einem der Ansprüche 1 bis 4, **dadurch gekennzeichnet, dass** zwischen dem Kragen (5) und dem zylindrischen Abschnitt der Innenhülse (4) eine Fase (9) ausgebildet ist.

6. Universaladapter nach einem der Ansprüche 1 bis 5, **dadurch gekennzeichnet, dass** der Kragen (3) der Außenhülse (2) eine außen umlaufende Nut (10) aufweist, in der in der Zusammenbaulage ein Dichtmittel, wie beispielsweise ein O-Ring angeordnet ist.

7. Universaladapter nach einem der Ansprüche 1 bis 8, **dadurch gekennzeichnet, dass** das an der Außenhülse (2) ausgebildete Außengewinde (6) sich vom freien Ende beginnend über einen Teilbereich der Länge des zylindrischen Abschnitts der Außenhülse (2) erstreckt.

8. Universaladapter nach einem der Ansprüche 1 bis 7, **dadurch gekennzeichnet, dass** der Kragen (3) der Außenhülse (2) eine Ausnehmung (12) aufweist, in der in der Zusammenbaulage ein zweites Befestigungsmittel, beispielsweise ein Gewindestift (13), angeordnet ist.

9. Universaladapter nach einem der Ansprüche 1 bis 8, **dadurch gekennzeichnet, dass** das erste Befestigungsmittel aus einer Scheibe (14) mit Durchgangslochung und Innengewinde (15) besteht, wobei das Innengewinde (15) dem Außengewinde (6) der Außenhülse (4) entspricht, wobei ferner dem Innengewinde (15) benachbart, über den Umfang der Scheibe (14) verteilt mehrere, beispielsweise vier, weitere parallel zur Durchgangslochung verlaufende Gewindelochungen (16) angeordnet oder ausgebildet sind, die in der Befestigungslage von Gewindestiften (17) durchgriffen sind, wobei in der Befestigungslage die die Scheibe (14) durchgreifenden Bereiche der Gewindestifte (17) auf eine Unterlegscheibe (18) einwirken, die gegen die Unterseite der Montagefläche anpressbar ist.

10. Universaladapter nach einem der Ansprüche 1 bis 8, **dadurch gekennzeichnet, dass** das erste Befestigungsmittel aus einer Mutter (19) mit Werkzeugangriff und einer Unterlegscheibe besteht.

11. Universaladapter nach einem der Ansprüche 1 bis 10, **dadurch gekennzeichnet, dass** der Universaladapter (1) einen Blendring (20) aufweist, der aus einem zylindrischen Abschnitt (21) mit Boden (22) und Durchgangslochung im Boden (22) besteht und die Kragen (3,5) der Außenhülse (2) und der Innenhülse (4) überdeckt bzw. abdeckt.

12. Universaladapter nach Anspruch 11,
**dadurch gekennzeichnet, dass** der zylindrische Abschnitt (21) des Blendrings (20) eine Gewindelochung (23) aufweist, die in der Gebrauchslage vom das zweite Befestigungsmittel bildenden Gewindestift (13) durchgriffen ist.

## Claims

1. A universal adapter (1) for receiving and supporting fittings, such as kitchen fittings or bathroom fittings, for controlling the inflow of water, which include a threaded connector for fastening to objects, the universal adapter (1) including a first cylindrical section in the form of an outer sleeve (2) with an outwardly projecting collar (3) on one end region for fastening to the passage hole in a mounting plate for the fitting, such as a kitchen worktop, further having a second cylindrical section in the form of an inner sleeve (4) with a second outwardly projecting collar (5) on one end region, wherein the outer diameter of the inner sleeve (4) is slightly smaller than the inner diameter of the outer sleeve (2) and the inner sleeve (4) is insertable into the outer sleeve (2) until the collar (5) on the inner sleeve (4) engages the collar (3) on the outer sleeve (2), wherein the region of the outer sleeve (2) engaging through the passage hole in the mounting plate for the fitting has an external screw thread (6) for a first fastening means and the fitting is fastenable to the inner sleeve by means of screwing its threaded connector into an internal screw thread (7) formed on the inner sleeve (4), **characterised in that** the inner diameter of the collar (3) on the outer sleeve (2) is slightly larger than the outer diameter of the collar (5) on the inner sleeve (4) so that the collar (5) on the inner sleeve (4) may be inserted precisely into the collar (3) on the outer sleeve (2).

2. A universal adapter as claimed in Claim 1, **characterised in that** the inner sleeve (4) may be introduced precisely into the outer sleeve (2).

3. A universal adapter as claimed in one of Claims 1 to 2, **characterised in that** the internal screw thread (7) on the inner sleeve (4) is formed close to the collar (5) on the inner sleeve (4).

4. A universal adapter as claimed in one of Claims 1 to 3, **characterised in that** formed on the collar (5) on the inner sleeve (4) there is a flange (8) projecting outwardly from the collar (5).

5. A universal adapter as claimed in one of Claims 1 to 4, **characterised in that** formed between the collar (5) and the cylindrical section of the inner sleeve (4) there is a bevel (9).

6. A universal adapter as claimed in one of Claims 1 to 5, **characterised in that** the collar (3) on the outer sleeve (2) includes an external peripheral groove (10), in which, in the assembled configuration, a sealing means, such as an O ring, is arranged.

7. A universal adapter as claimed in one of Claims 1 to 8, **characterised in that** the external screw thread (6) formed on the outer sleeve (2) extends, beginning from the free end, over a proportion of the length of the cylindrical section of the outer sleeve (2).

8. A universal adapter as claimed in one of Claims 1 to 7, **characterised in that** the collar (3) on the outer sleeve (2) includes a recess (12) arranged in which, in the assembled configuration, there is a second fastening means, for instance a threaded peg (13).

9. A universal adapter as claimed in one of Claims 1 to 8, **characterised in that** the first fastening means consists of a disc (14) with a passage hole and an internal screw thread (15), wherein the internal screw thread (15) corresponds to the external screw thread (6) on the outer sleeve (4), wherein further, adjacent to the internal screw thread (15), a plurality, preferably four, of further threaded holes (16) extending parallel to the through hole are arranged or formed distributed over the periphery of the disc (14), through which threaded pegs (17) pass in the fastened position, wherein, in the fastened position, the regions of the threaded pegs (17) passing through the disc (14) act on a washer (18), which is pressable against the underside of the mounting surface.

10. A universal adapter as claimed in one of Claims 1 to 8, **characterised in that** the first fastening means consists of a nut (19) with tool engagement and a washer.

11. A universal adapter in accordance with one of Claims 1 to 10, **characterised in that** the universal adapter (1) includes a cover ring (20), which consists of a cylindrical section (21) with a base (22) and a passage hole in the base (22) and overlaps with or covers the collars (3, 5) on the outer sleeve (2) and the inner sleeve (4).

12. A universal adapter as claimed in Claim 11, **characterised in that** the cylindrical section (21) of the cover ring (20) includes a threaded hole (23), through which, in the use position, the threaded peg (13) constituting the second fastening means passes.

## Revendications

1. Adaptateur universel (1) pour la réception et le maintien de robinets tels que des robinets de cuisine ou des robinets de salle de bains servant à régler l'afflux de l'eau, qui présente un raccord fileté pour la fixation à des objets, lequel adaptateur universel (1) présente une première partie cylindrique sous la forme d'un manchon extérieur (2) avec un collet (3) en saillie vers l'extérieur dans une zone terminale pour la fixation au trou de passage d'une plaque de montage pour le robinet, par exemple d'un plan de travail de cuisine, et présente en outre une seconde partie cylindrique sous la forme d'un manchon intérieur (4) avec un second collet (5) en saillie vers l'extérieur dans une zone terminale, le diamètre extérieur du manchon intérieur (4) étant légèrement plus petit que le diamètre intérieur du manchon extérieur (2) et le manchon intérieur (4) pouvant être introduit dans le manchon extérieur (2) jusqu'à ce que le collet (5) du manchon intérieur (4) soit appliqué contre le collet (3) du manchon extérieur (2),
dans lequel la zone du manchon extérieur (2) traversant le trou de passage de la plaque de montage pour le robinet présente un filetage (6) pour un premier moyen de fixation et le robinet peut être fixé au manchon intérieur par vissage de son raccord fileté dans un taraudage (7) réalisé sur le manchon intérieur (4),
**caractérisé en ce que** le diamètre intérieur du collet (3) du manchon extérieur (2) est légèrement plus grand que le diamètre extérieur du collet (5) du manchon intérieur (4), de sorte que le collet (5) du manchon intérieur (4) peut être introduit de manière parfaitement ajustée dans le collet (3) du manchon extérieur (2).

2. Adaptateur universel selon la revendication 1,
**caractérisé en ce que** le manchon intérieur (4) peut être introduit de manière parfaitement ajustée dans le manchon extérieur (2).

3. Adaptateur universel selon l'une des revendications 1 à 2, **caractérisé en ce que** le taraudage (7) sur le manchon intérieur (4) est réalisé près du collet (5) du manchon intérieur (4).

4. Adaptateur universel selon l'une des revendications 1 à 3, **caractérisé en ce qu'**une bride (8) faisant saillie du collet (5) vers l'extérieur est réalisée sur le collet (5) du manchon intérieur (4).

5. Adaptateur universel selon l'une des revendications 1 à 4, **caractérisé en ce qu'**un chanfrein (9) est réalisé entre le collet (5) et la partie cylindrique du manchon intérieur (4).

6. Adaptateur universel selon l'une des revendications 1 à 5, **caractérisé en ce que** le collet (3) du manchon extérieur (2) présente sur son pourtour extérieur une rainure (10) dans laquelle, en position assemblée, un moyen d'étanchéité, comme par exemple un joint torique, est disposé.

7. Adaptateur universel selon l'une des revendications 1 à 8, **caractérisé en ce que** le filetage (6) réalisé sur le manchon extérieur (2) s'étend à partir de l'extrémité libre sur une zone partielle de la longueur de la partie cylindrique du manchon extérieur (2).

8. Adaptateur universel selon l'une des revendications 1 à 7, **caractérisé en ce que** le collet (3) du manchon extérieur (2) présente un évidement (12) dans lequel, en position assemblée, un second moyen de fixation, par exemple une tige filetée (13), est disposé.

9. Adaptateur universel selon l'une des revendications 1 à 8, **caractérisé en ce que** le premier moyen de fixation est constitué d'un disque (14) avec un trou de passage et un taraudage (15), le taraudage (15) correspondant au filetage (6) du manchon extérieur (4), dans lequel sont en outre disposés ou réalisés, au voisinage du taraudage (15), plusieurs, par exemple quatre, autres trous filetés (16) s'étendant parallèlement au trou de passage et répartis sur la circonférence du disque, qui, en position de fixation, sont traversés par des tiges filetées (17), les zones des tiges filetées (17) qui traversent le disque (14) agissant, en position de fixation, sur une rondelle (18) qui peut être pressée contre la face inférieure de la surface de montage.

10. Adaptateur universel selon l'une des revendications 1 à 8, **caractérisé en ce que** le premier moyen de fixation est constitué d'un écrou (19) avec prise d'outil et d'une rondelle.

11. Adaptateur universel selon l'une des revendications 1 à 10, **caractérisé en ce que** l'adaptateur universel (1) présente une bague de finition (20) qui est constituée d'une partie cylindrique (21) avec un fond (22) et un trou de passage dans le fond (22) et qui recouvre ou masque les collets (3, 5) du manchon extérieur (2) et du manchon intérieur (4).

12. Adaptateur universel selon la revendication 11,
**caractérisé en ce que** la partie cylindrique (21) de la bague de finition (20) présente un trou fileté (23) qui, en position d'utilisation, est traversé par la tige filetée (13) formant le second moyen de fixation.
